# EUROPÄISCHE PATENTANMELDUNG

(11) **EP 0 701 359 A1**
(43) Veröffentlichungstag der Anmeldung: **13.03.1996**
(21) Anmeldenummer: 95113457.6
(22) Anmeldetag: 28.08.1995
(51) Int. Cl.: H04M 11/02, H04M 3/42

(54) **Verfahren zum Erstellen einer Telekommunikationsverbindung und Anordnung zur Durchführung des Verfahrens**

(30) Priorität: 05.09.1994 CH 2704/94
(71) Anmelder: ASCOM TECH AG, CH-3018 Bern (CH)
(72) Erfinder: Günther, Christoph-Georg, CH-5442 Fislisbach (CH)
(74) Vertreter: Roshardt, Werner Alfred, Dipl.-Phys.

(57) **Zusammenfassung**

Bei einem Verfahren zum Erstellen einer Telekommunikationsverbindung zwischen einem von einem ersten Endgerät (1) rufenden Anrufer und einem Angerufenen, welcher ein mobiles Rufsignalisierungsgerät (5) auf sich trägt, werden beim Abheben bzw. In-Betrieb-Nehmen eines beliebigen zweiten Endgeräts (6) Daten vom Rufsignalisierungsgerät (5) an das zweite Endgerät (6) übertragen, auf deren Basis die Telekommunikationsverbindung zwischen erstem und zweitem Endgerät (1 bzw. 6) erstellt wird. Die Endgeräte (1,6) können leitungsgebundene Telefonapparate, Mobilfunktelefone, Telefaxgeräte, E-mail-Terminals, Videophongeräte o.dgl. sein. Das Rufsignalisierungsgerät ist vorzugsweise in einer Armbanduhr integriert. Die Erfindung ermöglicht ein universelles personenbezogenes Telekommunikationssystem. Ein Teilnehmer kann unabhängig von seinem Aufenthaltsort stets unter derselben Nummer gefunden werden, ohne dass er selbst ein Funktelefon mit sich herumtragen muss. Es genügt, den jeweils nächstliegenden Apparat des Systems abzuheben bzw. zu starten, um mit den Anrufenden in Verbindung gesetzt zu werden.

## Beschreibung

Die Erfindung betrifft ein Verfahren zum Erstellen einer Telekommunikationsverbindung zwischen einem via Rufsignalisierungsgerät Angerufenen und einem von einem ersten Endgerät aus Anrufenden. Ferner bezieht sich die Erfindung auf eine Anordnung mit mindestens einem mobilen Rufsignalisierungsgerät, einer Zentrale, um ein Rufsignal an das Rufsignalisierungsgerät zu übermitteln und einem Telekommunikationssystem, umfassend eine Mehrzahl von Endgeräten.

### Stand der Technik

Es sind verschiedene Systeme bekannt, mit welchen erreicht werden kann, dass ein Benutzer stets erreichbar ist. Die auf den ersten Blick einfachste ist durch das Mobilfunktelefon verwirklicht. Der Besitzer eines solchen Geräts (Handy) ist nicht nur überall erreichbar, sondern kann von überall her anrufen. Nachteilig ist jedoch, dass ein Mobilfunktelefon einen relativ grossen Strombedarf hat und daher mit einem Akkumulator ausgerüstet ist, der immer wieder aufgeladen werden muss und dabei eine netzunabhängige Empfangsbereitschaft von 12 bis 24 Stunden und eine Gesprächsdauer von bestenfalls wenigen Stunden zulässt. Auch wenn die Schaltungstechnik und die Leistungsdichte der Akkumulatoren verbessert wird, ist in absehbarer Zeit nicht damit zu rechnen, dass die Bereitschaftszeiten mehr als verzehnfacht werden können. Eine Verzehnfachung der heutigen Leistung würde aber nicht viel mehr als eine netzunabhängige Empfangsbereitschaft von ein bis zwei Wochen bringen. Weiter ist eine minimale Grösse solcher Geräte durch den Akkumulator und die Anordnung von Mikrofon und Hörer gegeben. Dies führt dazu, dass ein ständiges Mitführen solcher Geräte typischerweise unpraktisch ist.

Eine Alternative stellen die sog. Pagersysteme dar. Ein kleines, leichtes Rufsignalisierungsgerät, das z. B. in einer Armbanduhr integriert ist, ist ständig in Empfangsbereitschaft für entsprechende Funksignale. Ein stromkonsumierender Sender ist nicht vorgesehen. Entsprechend haben diese Geräte eine Empfangsbereitschaft von einigen Monaten.

Der Nachteil der Pagersysteme besteht jedoch darin, dass der Rufende dem Gerufenen nur eine kurze Mitteilung (z. B. die zurückzurufende Telefonnummer) übermitteln kann. Die Praxis zeigt auch, dass viele Rufende Fehler bei der Eingabe machen, was zur Folge hat, dass der Gerufene nicht weiss, wen er zurückrufen muss. Bei fehlendem Rückruf weiss der Anrufende nicht, ob der Gerufene noch keine Zeit für den Rückruf fand, oder ob der Ruf den Gesuchten nicht erreicht hat. Während bei einem direkten Telefongespräch der Rufende belastet wird, muss bei einem Pagersystem meistens der Gerufene die Kosten für das Gespräch bezahlen, da er (zu einem späteren Zeitpunkt) auf die übermittelte Nummer zurückruft.

Für den Inhousebetrieb sind weiter Systeme bekannt, bei welchen die zu erreichende Person ein Rufsignalisierungsgerät ("Piepser") auf sich trägt und die bei seinem persönlichen Telefongerät eingehenden Anrufe auf das Rufsignalisierungsgerät umleiten kann. Trifft ein Anruf ein, gibt das Rufsignalisierungsgerät ein akustisches Signal von sich und zeigt die Nummer eines intern Rufenden an (externe Nummern können im analogen Telefonsystem nicht ermittelt werden), worauf die betreffende Person zu irgendeinem Telefon der hausinternen Zentrale gehen und seine Nummer einstellen kann. Er wird dann vom System automatisch mit dem Rufenden verbunden.

### Darstellung der Erfindung

Aufgabe der Erfindung ist es, ein Verfahren der eingangs genannten Art anzugeben, das den Benutzern eine grösstmögliche Unabhängigkeit und einen hohen Komfort bietet. Das Verfahren soll sich für ein universelles personenbezogenes Telekommunikationssystem eignen.

Ein Verfahren der eingangs genannten Art zeichnet sich gemäss der Erfindung dadurch aus, dass beim Abheben bzw. Starten eines beliebigen zweiten Endgeräts Daten automatisch vom Rufsignalisierungsgerät an das zweite Endgerät übertragen werden, auf deren Basis die Telekommunikationsverbindung zwischen dem ersten und dem zweiten Endgerät erstellt wird.

Der Kerngedanke der Erfindung liegt also darin, ein geschlossenes System mit einem Rufsignalisierungsgerät aufzubauen. Im Unterschied zu einem Mobilfunktelefon hat das erfindungsgemässe Rufsignalisierungsgerät nur die Aufgabe, die langreichweitigen Funksignale eines entfernten (z. B. landesweit operierenden) Senders zu empfangen. Die Aufrechterhaltung der entsprechenden Empfangsbereitschaft erfordert eine viel geringere Leistung als bei einem Handfunktelefon, da keine ständige Ueberwachung der Zellenumgebung, verbunden mit sog. "location updates", notwendig ist. Erfindungsgemäss werden die vom Rufsignalisierungsgerät empfangenen Daten automatisch, insbesondere berührungslos - z. B. mittels eines kurzreichweitigen Senders - an das Endgerät (z. B. den Telefonapparat) übermittelt, welches von der angerufenen Person gerade gestartet (bzw. abgehoben) wird. Im Prinzip genügt es, wenn das Rufsignalisierungsgerät einen passiv abfragbaren Speicher enthält, in welchem die zu übermittelnden Daten abgelegt wurden. Das Endgerät kann die Daten dann durch Aussenden eines Abfragesignals gewinnen.

Der Leistungsbedarf des Rufsignalisierungsgeräts wird jedoch nur unwesentlich erhöht, wenn es über einen kurzreichweitigen aktiven Sender zum Uebermitteln der Daten verfügt. Dieser Sender muss nämlich nur dann betrieben werden, wenn das Rufsignalisierungsgerät von einem Endgerät angesprochen wird. Die Uebermittlung der Daten beansprucht nur Bruchteile von Sekunden und ist nur zu Beginn eines Anrufs erforderlich. Auch kann die Empfangsbereitschaft des kurzreichweitigen Senders auf eine bestimmte Zeit nach Eintreffen eines Anrufes beschränkt werden (z. B. auf 10-20 Minuten).

Unter diesen Voraussetzungen ist es möglich, ein universelles personenbezogenes Telekommunikationssystem (UPT) aufzubauen, bei welchem die Benutzer keine voluminösen und relativ schweren Geräte (wie z. B. ein Mobilfunktelefon oder ein schnurloses Telefon) mit sich herumtragen müssen und welches bereits heute mit Batteriestandzeiten von drei Monaten realisierbar ist. Es darf erwartet werden, dass durch den Fortschritt der Technik Standzeiten von einem Jahr erreicht werden können (was der durchaus üblichen und komfortablen Betriebszeit einer Quarzuhrbatterie entspricht).

Besonders interessant ist es, diesen Erfindungsgedanken auf den Empfang von Telefax-, E-mail-Uebermittlungen u. dgl. anzuwenden. Um eine solche (z. B. eine Telefax-) Uebermittlung an eine Person durchführen zu können, deren Aufenthaltsort a priori nicht bekannt ist, die jedoch ein Rufsignalisierungsgerät gemäss der Erfindung mit sich führt, sind folgende Schritte durchzuführen:
a) Die Mitteilung wird durch ein Endgerät unter Angabe einer dem Rufsignalisierungsgerät zugeordneten Nummer an eine Zentrale übermittelt.
b) Die Zentrale speichert die Mitteilung in einem Zwischenspeicher ab und
c) erlässt aufgrund der eingegebenen Nummer einen Funkruf an das Rufsignalisierungsgerät.
d) Die das Rufsignalisierungsgerät mitführende Person meldet sich bei der Zentrale mit Hilfe eines beliebigen, mit dem ersten Endgerät kommunikationsfähigen zweiten Endgerät und
e) erhält die zwischengespeicherte Mitteilung von der Zentrale an das zweite Endgerät übermittelt.

Es ist zu beachten, dass dieses Verfahren nichts mit der bekannten Rufumleitung zu tun hat, die von der gerufenen Person vor der Ortsveränderung durchgeführt werden muss und das Endgerät, auf welches die Mitteilung gehen soll, im voraus bezeichnen muss. Vielmehr kann die Mitteilung an jedem beliebigen (geeigneten) Endgerät empfangen werden. Nicht grundsätzlich ausgeschlossen, jedoch weniger vorteilhaft ist es, zwischen den Endgeräten eine direkte Verbindung zu erstellen, bevor die Mitteilung (Telefax, Daten etc.) übermittelt wird. Auf die Zwischenspeicherung könnte dann im Prinzip verzichtet werden.

Die über Funkruf eingehende Aufforderung, sich an ein entsprechendes Endgerät zu begeben, kann dann zu einem beliebigen späteren Zeitpunkt (nach Beendigung der Autofahrt, der Sitzung, ...) wahrgenommen werden. Es sei dabei bemerkt, dass die Wichtigkeit der eintreffenden Nachricht über Funkruf mitgeteilt werden kann (z. B. Dokument, das für den zweiten Teil der Sitzung benötigt wird). Hat sich der Gerufene an ein entsprechendes Endgerät (eigen, öffentlich, ...) begeben, löst er durch Drücken des "Receive"-Knopfes an letzterem Endgerät die Abfrage seines Rufsignalisierungsgerätes aus. Das Endgerät präsentiert ihm in einem Menu die vorliegenden Daten (Fax, E-mail, ...) die entweder aus dem Rufsignalisierungsgerät oder vom Server geholt wurden. Nach der Auswahl werden die entsprechenden Dokumente auf dem Server abgeholt und dargestellt oder ausgedruckt. Die Kosten für letzteren Schritt dürften typischerweise vom Empfänger, könnten aber auch über ein entsprechendes Zertifikat vom Sender übernommen werden.

Im Prinzip könnte auch auf den automatischen Datenaustausch zwischen dem Telefaxgerät bzw. E-mail-Terminal und dem Rufsignalisierungsgerät verzichtet werden. Die gerufene Person gäbe dann an einem beliebigen (in der Regel dem gerade in der Nähe befindlichen) Endgerät einen persönlichen Code ein, worauf die Verbindung erstellt würde. Diese Verfahrensweise ist jedoch nicht nur weniger komfortabel, sondern auch weniger sicher, da eine kryptographisch sichere Authentifikation nicht möglich ist.

Vorzugsweise teilt die Zentrale dem Rufsignalisierungsgerät die Art der Mitteilung resp. die Art des erforderlichen zweiten Endgeräts mit. Unabhängig von der Art der Mitteilung ist es dann möglich, den gewünschten Teilnehmer unter ein und derselben Nummer und überall zu erreichen (UPT).

Eine Variante des Verfahrens, die die Implementation mit den bereits bestehenden Telefongeräten erlaubt, zeichnet sich dadurch aus, dass das Rufsignalisierungsgerät an Stelle von oder als Ergänzung zum Sender kurzer Reichweite über eine Art Tonwahlsignalisierungsvorrichtung verfügt, um die Daten via Sprechkapsel des Telefons an die Zentrale zu übermitteln. (Z. B. stellt der erste Teil der Ziffernfolge eine Verbindung zu einem Server her, während der zweite die eigentliche Identifikation und Authentifizierung des Teilnehmers enthält.

Komfortabler ist natürlich ein kleiner Hochfrequenzsender im Rufsignalisierungsgerät. Der Benutzer muss dann nichts anderes tun, als den Hörer des nächstliegenden Telefons abzuheben.

Die automatische Datenübertragung vom Rufsignalisierungsgerät an das Endgerät erfolgt vorzugsweise berührungslos mit Hochfrequenzsignalen. Die Reichweite muss nicht mehr als ein bis zwei Meter sein. Ist das Rufsignalisierungsgerät in einer Armbanduhr integriert, die der Benutzer am linken Handgelenk trägt, und hebt der Benutzer den Telefonhörer mit der linken Hand ab, dann genügen Reichweiten von 20-30 cm. Handelt es sich beim genannten Gerät um ein kleines in der Tasche (in der Geldbörse, am Schlüsselbund o. dgl.) mitgeführtes Modul, dann sind die genannten ein bis zwei Meter vollständig hinreichend. In jedem Fall ist es dabei vorteilhaft, das Rufsignalisierungsgerät als ein Kleingerät mit einem Funkempfänger, einem kurzreichweitigen Sender/Empfänger, aber ohne langreichweitigen Funksignalsender zu gestalten.

Die automatische Datenübertragung zwischen einer Armbanduhr o. dgl. und dem Endgerät lässt sich auch unabhängig vom erfindungsgemässen Verfahren zur Erstellung einer Telekommunikationsverbindung via Rufsignalisierungsgerät einsetzen.

Indem die gerufene Person sich mittels des Rufsignalisierungsgeräts gegenüber der Zentrale identifizieren kann, können dem Benutzer die unterschiedlichsten Dienstleistungen zur Verfügung gestellt werden. So kann z. B. die Zentrale oder das Rufsignalisierungsgerät einen Speicher für Daten betreffend eine persönliche Konfiguration des vom Angerufenen benutzten Endgeräts aufweisen. Das Endgerät selbst verfügt ebenfalls über einen Zwischenspeicher zum Laden der Konfigurationsdaten. Der Benutzer kann also jedes beliebige Endgerät wie sein persönliches bedienen, da jenes die abgespeicherten Kurzwahlnummern o. dgl. des Benutzers kennt.

Die eigentliche Vermittlung der Verbindung (des Telefongesprächs z. B.) kann auf zwei Arten erfolgen: vorwärts und rückwärts. Bei der Vorwärtsvermittlung wird die Verbindung zunächst bis zu einem als Dienstserver ausgebildeten Vermittlungsknoten (Zentrale) geführt (erste "Halbverbindung"). Von hier aus wird der gewünschte Teilnehmer über Funkruf gerufen. Dieser stellt mit der oben beschriebenen Funktionalität seines Rufsignalisierungsgeräts ebenfalls die Verbindung zum Dienstserver her (zweite "Halbverbindung"), der dann die beiden "Halbverbindungen" zusammenführt. Der Vorteil dieser Vorgehensweise ist, dass sie mit heutigen Systemen ohne weiteres implementiert werden kann. Der Nachteil ist, dass jedes Gespräch über den Dienstserver des gerufenen Teilnehmers gehen muss (z. B. führt der Anruf eines sich in New York befindlichen Schweizer Teilnehmers durch einen Teilnehmer in Washington zwangsläufig über die Schweiz).

Dieses Problem wird bei der Rückwärtsvermittlung vermieden. In diesem Fall wird dem Dienstserver lediglich der Wunsch, einen Teilnehmer zu sprechen, mitgeteilt (könnte auch durch ein Signalisierungsdatenpaket erfolgen). Der Server lässt den Teilnehmer über Funk rufen und liefert ihm ein authentifiziertes Belastungszertifikat. Der gerufene Teilnehmer stellt durch die oben beschriebene Funktionalität eine Verbindung zum nächsten Dienstserver her und überträgt Identität und Ort des rufenden Teilnehmers und das Belastungszertifikat. Der Dienstserver stellt die Verbindung her und veranlasst die Gebührenerhebung beim rufenden Teilnehmer. Die Vorteile einer solchen Variante in bezug auf die Netzbelastung sind offensichtlich. Als Nachteil ist jedoch festzuhalten, dass es in bestehenden Netzen nicht immer möglich ist, die Nummer des rufenden Anschlusses zu ermitteln.

In einer Variante übermittelt die Zentrale dem Rufsignalisierungsgerät ein authentifiziertes Zertifikat in Form digitaler Codes, das die Belastung des Anrufenden erlaubt. Dieses wird vom Rufsignalisierungsgerät der Zentrale vermittels des zweiten Endgeräts später wieder zurückgegeben. In beiden Fällen lässt sich die Gebührenfrage in einer für den Angerufenen befriedigenden Art lösen. Es ist zu beachten, dass dies bei den bekannten Pagersystemen grundsätzlich nicht möglich ist.

Vorzugsweise wird ein systemmässig abzudeckendes (geografisches) Gebiet hierarchisch in Teilgebiete aufgeteilt, in welchen eine Aktivierung des Rufsignalisierungsgeräts zielgerichtet durchgeführt werden kann. D. h. es wird zunächst in einem oder mehreren bestimmten, hierarchisch untergeordneten Teilgebieten versucht, die gesuchte Person zu erreichen. Nach einer vorgegebenen Zeitspanne des erfolglosen Rufens wird ein Globalruf ausgesendet. Gesucht wird natürlich zunächst in den Teilgebieten, in denen sich die gesuchte Person aus statistischen oder Plausibilitätsgründen mit grösster Wahrscheinlichkeit aufhält. Erst wenn sich die gesuchte Person beim System nicht meldet, wird auf einer hierarchisch übergeordneten Stufe weitergesucht. In der Praxis wird es genügen, an zwei bis drei Orten eventuell gleichzeitig zu suchen (z. B. zu Hause oder am Arbeitsplatz). Die hierarchische Strukturierung erhöht (durch die Anwendung örtlich begrenzter Systembeanspruchung) die Kapazität eines Systems beträchtlich. Die für die Aktivierung des Rufsignalisierungsgeräts zur Verfügung stehenden Frequenzbänder sind nämlich in der Regel von vornherein festgelegt und können nicht ohne weiteres ausgedehnt werden.

Es ist zu beachten, dass eine hierarchisch strukturierte Signalisierung bei den bisher bekannten Pagersystemen keinen Sinn macht, da das System selbst vom Gerufenen keine Rückmeldung erhält. Es hat also nicht die Möglichkeit festzustellen, ob ein Ruf erfolgreich gewesen ist oder nicht. Ebenfalls bemerkenswert ist, dass die hierarchische Signalisierung gemäss der Erfindung nicht voraussetzt, dass (wie bei einem zellularen Telefonsystem) der Aufenthaltsort des Empfängers zu jedem Zeitpunkt dem System bekannt ist.

Weiter kann die Zentrale einen Speicher für ein Benutzerprofil des das Rufsignalisierungsgerät mit sich tragenden Benutzers aufweisen. Das Benutzerprofil enthält z. B. Informationen betreffend Rufumleitung, Abwesenheitsmeldung, wahrscheinlichsten Aufenthaltsort o. dgl. Der Benutzer kann also beispielsweise auf dasselbe Rufsignalisierungsgerät Geschäfts- und Privatnummer legen. Er kann unter der Geschäftsnummer eine Abwesenheitsmeldung hinterlassen oder seinen Aufenthaltsort, was das Suchen beschleunigt.

Eine wenig beachtete Eigenschaft konventioneller Telefonsysteme ist, dass sie eine gewisse Authentifikation des Angerufenen gewähren, z. B. erwartet man, dass ein Anruf auf eine Bank durch einen Bankangestellten beantwortet wird. Ausserdem ist es nur durch "Anzapfen" der Leitung möglich herauszufinden, wer gerade mit wem spricht. Um diese Eigenschaften mit der erfindungsgemässen Technik wieder herzustellen, sind kryptographische Verfahren erforderlich. Beide Probleme können weitgehend gelöst werden durch Verschlüsselung der über Funk übermittelten Daten.

Vorzugsweise wird dabei die Identität des Gerufenen getrennt verschlüsselt und zwar so, dass sie vom Rufsignalisierungsgerät vorausberechnet werden kann und eine Zeitlang gilt. Dies, um den Stromverbrauch zu minimieren. Insbesondere muss vermieden werden, dass der Empfänger in der aktiven Zeit, während derer ein für ihn bestimmter Ruf eintreffen könnte, jeden beliebigen Ruf zu entschlüsseln versucht (übermässiger Energieverbrauch).

Bei Gesprächen dürfte der erwähnte Schutz in der Regel genügen. Ein Abfangen der Gespräche, insbesondere bei der Vorwärtsvermittlung, ist jedoch immer noch möglich. Dieses kann verhindert werden, indem über Funk eine Zufallszahl übertragen wird, und diese vom Rufsignalisierungsgerät in einer nur diesem Gerät (und einem Dienstserver) bekannten Weise transformiert wird. Das Resultat wird zwecks Authentifikation dem Dienstserver weitergegeben, der es entweder selbst prüft oder durch einen geeigneten Server prüfen lässt, bevor er die Verbindung durchstellt.

Aus der Detailbeschreibung und der Gesamtheit der Patentansprüche ergeben sich weitere vorteilhafte Merkmalskombinationen der Erfindung.

### Kurze Beschreibung der Zeichnungen

Die zur Erläuterung der Ausführungsbeispiele verwendeten Zeichnungen zeigen:
- Fig. 1: Eine schematische Darstellung des Systems zur Erläuterung des erfindungsgemässen Verfahrensablaufs;
- Fig. 2: ein grobes Blockschaltbild eines Rufsignalisierungsgeräts und eines für den automatischen Datenaustausch ausgebildeten Telefonapparats.

In den Figuren sind gleiche Teile durchwegs mit gleichen Bezugszeichen versehen.

### Wege zur Ausführung der Erfindung

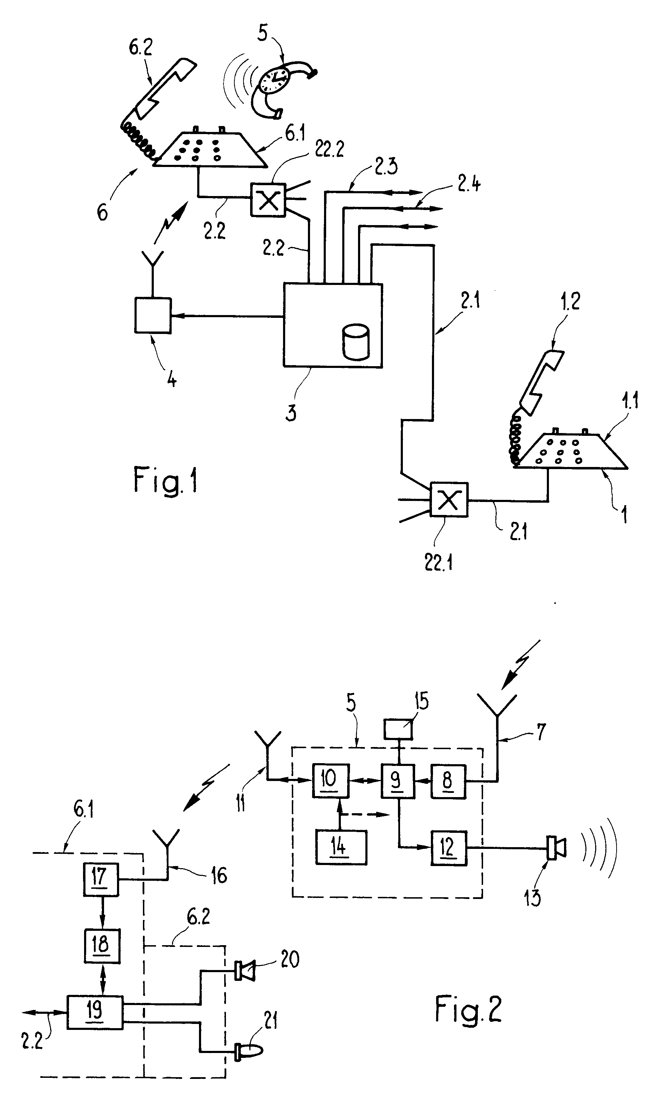

Zur Erläuterung des Verfahrensablaufs wird angenommen, eine Person A wolle mit einer Person B telefonieren. A braucht dabei nicht zu wissen, wo sich B gerade aufhält. A geht also - gemäss Fig. 1 - zu irgendeinem Telefonapparat 1, hebt den Hörer 1.2 ab und wählt die personenbezogene Nummer von B.

Die Tischstation 1.1 des Telefonapparats 1 wird über eine Leitung 2.1 (via einer beispielhaft gezeigten Vermittlungszentrale 22.1) automatisch mit einer Zentrale 3 (Dienstserver) verbunden. Es wird nun der Einfachheit wegen angenommen, dass diese bereits die notwendige Funktionalität besitzt (anderenfalls würde an eine entsprechende Zentrale weitervermittelt). Die Zentrale 3 erkennt die Nummer als nicht zu einem bestimmten Endgerät, sondern als zu einer bestimmten Person resp. einem bestimmten Rufsignalisierungsgerät 5 gehörend. Sie lässt daher durch einen Funksignalsender 4 ein codiertes Rufsignal aussenden, welches das Rufsignalisierungsgerät 5 (welches z. B. in einer Armbanduhr integriert ist) aktiviert. Die Zentrale hält die Verbindung zum Telefonapparat 1 in der Zwischenzeit aufrecht und koppelt z. B. ein Tonsignal, das "warten" signalisiert, in die Leitung 2.1 ein. Der Person A wird also in irgendeiner Weise zu erkennen gegeben, dass die Person B gesucht wird und dass A nicht aufhängen soll.

Sobald das Rufsignalisierungsgerät 5 das langreichweitige Funksignal des Funksignalsenders 4 empfängt und erkennt, dass das Funksignal für es selbst bestimmt ist, gibt es z. B. ein akustisches Alarmsignal von sich. Auf einer Anzeige (LCD) wird zudem angezeigt, dass ein Telefonanruf entgegengenommen werden soll. Es kann auch die Nummer des Rufenden angegeben werden.

Die Person B geht nun zu irgendeinem Telefonapparat 6 des Telekommunikationssystems und hebt den Hörer 6.2 ab. Der Telefonapparat 6 kann z. B. ein öffentlich zugängliches Münztelefon, der persönliche Apparat des Freundes, bei welchem sich B gerade aufhält, ein Mobilfunktelefon oder natürlich auch das eigene Telefon des Benutzers sein.

Beim Abheben des Telefonhörers 5.2 sendet ein in der Tischstation 6.1 oder im Hörer 6.2 integrierter kurzreichweitiger Sender ein Abfragesignal aus, das vom Rufsignalisierungsgerät 5 empfangen wird und dieses veranlasst, die erforderlichen Daten zu übertragen. Die Daten umfassen z. B. einen Identifikationscode des Rufsignalisierungsgeräts 5, die Telefonnummer des Telefonapparats 1.

Beim Abheben des Telefonhörers 6.2 wird der Telefonapparat 6 automatisch über eine Leitung 2.2 (z. B. via der beispielhaft dargestellten Vermittlungszentrale 22.2) mit der Zentrale 3 verbunden. Die vom Rufsignalisierungsgerät 5 an den Telefonapparat 6 weitergegebenen Daten werden an die Zentrale 3 übermittelt. Diese erkennt nun, dass die gesuchte Person B am Telefonapparat 6 den hängigen Anruf der Person A entgegennehmen möchte. Sie verbindet daher die Leitungen 2.1 und 2.2 und die beiden Personen A und B können miteinander sprechen.

Hätte sich die Person B an einem anderen Ort aufgehalten, dann hätte die Verbindung ebensogut über die Leitungen 2.3 oder 2.4 zustande kommen können.

Fig. 2 zeigt ein stark vereinfachtes Blockschaltbild des Rufsignalisierungsgeräts 5. Es wird von einem batterie- oder akkumulatorbetriebenen Stromversorgungsteil 14 gespeist. Eine Empfangsantenne 7 für langreichweitige Funksignale des Funksignalsenders 4 hängt an einer Empfängerschaltung 8, welche die Demodulation der Empfangssignale und deren Decodierung durchführt. Die übertragenen Daten werden an eine Steuerschaltung 9 weitergegeben, welche ihrerseits einen Alarmsignalgenerator 12 aktiviert und die Daten zwischenspeichert. Ein vom Alarmsignalgenerator 12 angesteuerter Miniaturlautsprecher 13 erzeugt ein akustisches Signal (z. B. ein "Piepstonsignal", eine Vibration oder sonstige Signalisierung), welches die Aufmerksamkeit der Person B auf sich lenkt. Eine Flüssigkeitskristallanzeige 15 (LCD) bringt z. B. zugleich die Telefonnummer der rufenden Person B sowie die Art der gewünschten Verbindung ("geschäftliches Telefongespräch") zur Anzeige.

Beim Abheben eines beliebigen nächstgelegenen Telefonapparats 6 geht von einer Apparatesteuerung 19 ein Signal an eine Steuerschaltung 18 aufgrund der Tatsache, dass z. B. der Telefonhörer 6.2 abgehoben worden ist oder eine Starttaste des Telefonapparats betätigt worden ist. Die Steuerschaltung 18 aktiviert nun eine Sender-/Empfängerschaltung 17, um über eine Antenne 16 mit einer Antenne 11 des Rufsignalisierungsgeräts 5 die erforderlichen Daten austauschen zu können. Eine Sender-/Empfängerschaltung 10 im Rufsignalisierungsgerät 5 detektiert die Anfrage, meldet dies der Steuerschaltung 9 und erhält die zu übermittelnden Daten. Die eigentliche kurzreichweitige Datenübertragung kann in an sich bekannter Weise erfolgen. Nach Abschluss der Datenübertragung werden die Daten von der Sender-/Empfängerschaltung 17 an die Steuerschaltung 18 weitergegeben, welche eine Apparatesteuerung 19 (Telefonschaltung) veranlasst, über die Leitung 2.2 mit der Zentrale 3 in der gewünschten Weise Kontakt aufzunehmen.

Sobald die Zentrale 3 die Verbindung zum Telefonapparat 1 erstellt hat, kann die Person B via Mikrofon 21 der Sprechmuschel und via Lautsprecher 20 der Hörmuschel des Hörers 6.2 mit der Person A kommunizieren.

Soviel zu diesem Ausführungsbeispiel. Es ist klar, dass das gleiche Prinzip z. B. für die Uebermittlung einer Telefaxmitteilung verwendet werden kann. Anstelle des Abhebens eines Telefonhörers tritt z. B. das Drücken einer Starttaste. Die Uebertragung des Gedankens auf das Erstellen von Videophon-Verbindungen oder Uebermitteln von E-mails ist angesichts der vorangegangenen Erläuterungen offensichtlich.

In Abwandlung des Ausführungsbeispiels kann anstelle des automatischen Datenaustausches mit dem Telefonapparat folgendes Vorgehen gewählt werden. Die Person B wählt die Telefonnummer des für die Signalisierung zuständigen Servers entweder selbst oder durch manuelles Auslösen einer Tonwahlfolge (Sprechmuschel wird auf den Rufsignalisierungsempfänger gedrückt). Danach werden in jedem Fall die Daten vom Rufsignalisierungsgerät 5 via Tonsignal (akustische Signalisierung) an den genannten Server direkt übertragen. Dieser stellt dann die Verbindung zur Person A durch. Mit diesem Vorgehen ist es also möglich, das herkömmliche Telekommunikationssystem mit den vernetzten lokalen Vermittlungszentralen zu verwenden. Am Telefonsystem muss dann einfach der genannte Server angeschlossen werden, der von jedem beliebigen Endgerät her über eine bestimmte Nummer erreicht werden kann. Die Verbindung zwischen den Personen A und B wird dann durch diesen Server erstellt.

Eine Alternative zum weiter oben beschriebenen Vorwärtsverbindungsaufbau ist der im folgenden erläuterte Rückwärtsverbindungsaufbau. (Es wird davon ausgegangen, dass viele erfindungsgemässe lokale Zentralen im Telekommunikationsnetz integriert sind.) Auch bei der hier zur Diskussion stehenden Alternative geht der Verbindungswunsch vom Telefonapparat 1 via Leitung 2.1 (Verbindungspfad) zur Zentrale 3 (in deren Einzugsbereich der Telefonapparat 1 ist). Diese erlässt einen Funkruf über den Funksignalsender 4. Der Teilnehmer A muss den Erfolg des Suchvorgangs nicht abwarten, sondern kann den Hörer 1.2 auflegen. Die Zentrale 3 erzeugt aufgrund des vom Telefonapparat 1 eingetroffenen Verbindungswunsches ein authentifiziertes Zertifikat. Dieses wird zwischengespeichert, bis der Teilnehmer B von irgendeinem beliebigen Telefonapparat 6 aus an eine für ihn zuständige, erfindungsgemässe Zentrale (in der Fig. 1 nicht dargestellt) zurückruft. Das Rufsignalisierungsgerät 5 übermittelt den Rückrufwunsch via Telefonapparat 6 an die genannte zweite Zentrale. Letztere weiss (aufgrund der übermittelten Daten), dass der vom Teilnehmer B ausgehende Rückruf dem Verbindungswunsch des Teilnehmers A entspricht. Aufgrund der via Funksignalsender 4 an das Rufsignalisierungsgerät 5 und von dort an die zweite Zentrale übertragenen Daten kann die Zentrale das bei der ersten Zentrale abgelegte, authentifizierte Zertifikat lokalisieren, den Telefonapparat 1 automatisch anrufen und die Verbindung zwischen den beiden Teilnehmern A und B erstellen. Es wird dann die kürzestmögliche Verbindung zwischen den beiden Teilnehmern A und B erstellt. Das authentifizierte Zertifikat erlaubt dabei, die Gebühren für die vom Teilnehmer B ausgehende Rückwärtsverbindung dem Teilnehmer A zu belasten. (Hätte der Teilnehmer B den Teilnehmer A angerufen, ohne dass ein erfindungsgemässes Zertifikat vorgelegen hätte, wären die Kosten für die Verbindung natürlich dem Teilnehmer B belastet worden.)

Das Zertifikat kann im Prinzip auch via Funksignal an das Rufsignalisierungsgerät 5 und von dort zusammen mit den sonstigen Daten an den Telefonapparat 6 und dann an die zweite Zentrale übermittelt werden.

Ist nur eine Zentrale in den Ablauf involviert, so ist kein authentifiziertes Zertifikat nötig. Vielmehr genügt eine entsprechende "Vornotierung" (resp. das Setzen eines Flags) in einem Speicher.

Bei der soeben beschriebenen Rückwärtsvermittlung muss im Prinzip vom Endgerät des Teilnehmers A nicht eine eigentliche Verbindung zur Zentrale erstellt werden. Es genügt die Uebermittlung eines signalisierenden Datenpakets. Ein solches kann in einem digitalen Netz z. B. über einen separaten Signalisierungskanal übermittelt werden.

Das Rufsignalisierungsgerät kann z. B. auch mit einem Speicher für Informationen über die persönliche Konfiguration des Endgeräts ausgestaltet sein. Beim Abheben des Telefonhörers bzw. beim Drücken einer Starttaste werden diese Daten zusammen mit den vom Funksignalsender 4 übermittelten Daten zum Terminal übertragen und dort zwischengespeichert. Eine ähnliche Dienstleistung kann z. B. durch einen Speicher in der Zentrale zur Verfügung gestellt werden. Der Benutzer kann sich dadurch bei jedem Endgerät der von ihm zu irgendeinem früheren Zeitpunkt programmierten Konfiguration bedienen. Vorteilhaft ist es, wenn diese Konfiguration bei jedem Terminal nach Bedarf geändert und an das Rufsignalisierungsgerät bzw. die Zentrale zurückgegeben werden kann. D. h. der Benutzer hat an jedem Terminal das volle Dienstleistungsspektrum zur Verfügung.

Das erfindungsgemäss bevorzugte Konfigurationsverfahren, das auf der automatischen Datenübertragung vom Rufsignalisierungsgerät zum Endgerät basiert, kann im Prinzip auch unabhängig vom erfindungsgemässen Verfahren zur Erstellung einer Telekommunikationsverbindung eingesetzt werden. D. h. der automatische Datenaustausch zwischen einem kleinen "low consumption"-Gerät (das nicht unbedingt ein Rufsignalisierungsgerät zu sein braucht) und einem beliebigen (jedoch entsprechend ausgebildeten) Endgerät kann immer dann in Gang gesetzt werden, wenn das Endgerät vom Benutzer in Betrieb genommen wird. Das kleine Gerät übermittelt z. B. seine Identität an das Endgerät und infolgedessen an die Zentrale und ermöglicht dadurch das automatische Belasten des Telefonanrufs. In diesem Sinn ist das Gerät ähnlich wie eine Kreditkarte, muss jedoch nicht in den Apparat eingeführt werden. Zusätzlich kann nun auch die persönliche Konfiguration des Terminals übertragen und zwischengespeichert werden. Der Benutzer kann also z. B. über die Kurzwahlfunktionen die gewünschte Person anrufen. Verfügt das Endgerät über einen Bildschirm und eine interaktive Benutzerführung, dann können die Benutzerführung und die Bildschirmanzeige gegebenenfalls ebenso automatisch benutzerspezifisch programmiert werden.

Im Prinzip muss der Datenaustausch zwischen Funksignalisierungsgerät und Terminal nicht berührungslos ablaufen. Das Rufsignalisierungsgerät kann z. B. ein Kreditkartenformat haben und in den Kartenleser eines Endgeräts einführbar sein.

Der Funksignalsender 4 steht vorzugsweise stellvertretend für ein hierarchisches Signalisierungssystem. Bei einem solchen ist ein ganzes abzudeckendes Gebiet in Teilgebiete (Zellen) unterteilt. Jede Zelle verfügt über eine Basisstation, um das entsprechende Teilgebiet (funksignalmässig) abdecken zu können. Zusätzlich ist z. B. eine das ganze Gebiet abdeckende Basisstation zur Erzeugung von Globalrufen vorgesehen.

Jedesmal wenn der Benutzer einen Anruf beantwortet, erfährt das Telekommunikationssystem, wo sich der Anrufer momentan aufhält. Das System kann daher eine Statistik der Aufenthaltsorte führen (diese sollte insbesondere die Tageszeit und den Wochentag als Parameter berücksichtigen). Bei jedem Anruf kann der Ruf zunächst in der Zelle mit der grössten Aufenthaltswahrscheinlichkeit durchgeführt werden. Antwortet der Gerufene nicht innerhalb einer bestimmten Zeit (z. B. 30 s), dann werden z. B. auch diejenigen Zellen mit geringerer Aufenthaltswahrscheinlichkeit abgesucht. In einer dritten Stufe kann dann ein globaler Ruf durchgeführt werden. In 50-80% der Fälle wird der Benutzer zu Hause oder am Arbeitsplatz sein. Es wird also ein gezielter Lokalruf in der Regel genügen. Es leuchtet ein, dass auf diese Weise die Benutzerkapazität des Systems (im Vergleich zu einem Fall, wo nur Globalrufe vorgesehen sind) beträchtlich erhöht wird.

Um eine schnelle Lokalisierung des Rufsignalisierungsgeräts im hierarchischen System zu ermöglichen, können Stationen, die ohnehin eine Identifizierung des Anwesenden erforderlich machen (Personenkontrolle am Arbeitsplatz etc.) den Aufenthaltsort dem Telekommunikationssystem mitteilen. Unerwünscht ist jedoch ein zwingendes Registrieren beim Wechsel des Aufenthaltsorts. Zu beachten ist, dass unterschiedliche Plausibilitätskriterien zur Ermittlung des Aufenthaltsorts möglich sind. Neben der Führung einer Statistik der Aufenthaltsorte ergeben sich z. B. auch aus den Orten der kürzlich geführten Telefongespräche Bedingungen, um den Aufenthaltsort abzugrenzen (so kann sich z. B. das Rufsignalisierungsgerät innerhalb einer kurzen Zeitdauer nicht beliebig weit weg vom vorangehenden Anrufempfangsort bewegen).

Zusammenfassend ist festzuhalten, dass durch die Erfindung die Voraussetzungen zur Schaffung eines universellen, personenbezogenen Telekommunikationssystems geschaffen worden sind. Ein Teilnehmer kann unabhängig von seinem Aufenthaltsort stets unter derselben Nummer gefunden werden, ohne dass er selbst ein mobiles Funktelefon mit sich herumtragen muss. Es ist möglich, von jedem beliebigen Apparat (Telefonapparat, Mobilfunktelefon, Telefaxgerät, Datenterminal, Videophongerät etc.) des Telekommunikationssystems aus unter der persönlichen Nummer Telefongespräche u. dgl. entgegenzunehmen. Eine vorgängige Rufumleitung auf den jeweiligen Apparat ist nicht erforderlich.

Erfindungsgemäss wird also ein Teilnehmer für einen bestimmten Dienst (Gespräch, Fax, E-mail, ...) gerufen. Der Ruf geht aus von einem Endgerät (Telefon, Fax, Terminal, ...) oder einem sog. Server (Zentrale für Faxübermittlung, E-mail-Uebermittlung etc.). Der Funkruf (vom Funksignalsender) wird nur zur Signalisierung und zum Gesprächsaufbau verwendet. Es müssen also nur wenige Datenpakete per Funk übermittelt werden. Der eigentliche Informationsaustausch (Uebertragung der Daten, Telefongespräche etc.) erfolgt über das jeweils geeignete resp. gewünschte Medium und unterliegt damit geringeren Einschränkungen bez. Uebertragungsgeschwindigkeit (Datenrate) und Kosten.

## Patentansprüche

1. Verfahren zum Erstellen einer Telekommunikationsverbindung zwischen einem via Rufsignalisierungsgerät (5) Angerufenen und einem von einem ersten Endgerät (1) aus Anrufenden, dadurch gekennzeichnet, dass beim Abheben bzw. Starten eines beliebigen zweiten Endgeräts (6) Daten vom Rufsignalisierungsgerät (5) an das zweite Endgerät (6) übertragen werden, auf deren Basis die Telekommunikationsverbindung zwischen erstem und zweitem Endgerät (1 bzw. 6) erstellt wird.

2. Verfahren zum Uebermitteln einer Telefax-, E-mail- oder ähnlichen Mitteilung von einem ersten Endgerät (1) an eine, ein Rufsignalisierungsgerät (5) mit sich führende Person, deren Aufenthaltsort a priori nicht bekannt ist, mit folgenden Schritten:
a) Die Mitteilung wird durch ein Endgerät (1) unter Angabe einer dem Rufsignalisierungsgerät (5) zugeordneten Nummer an eine Zentrale (3) übermittelt;
b) die Zentrale (3) speichert die Mitteilung in einem Zwischenspeicher ab und
c) erlässt aufgrund der eingegebenen Nummer einen Funkruf an das Rufsignalisierungsgerät (5);
d) die das Rufsignalisierungsgerät (5) mitführende Person meldet sich bei der Zentrale (3) mit Hilfe eines beliebigen, mit dem ersten Endgerät (1) kommunikationsfähigen zweiten Endgerät (6) und
e) erhält die zwischengespeicherte Mitteilung von der Zentrale (3) an das zweite Endgerät (6) übermittelt.

3. Verfahren nach Anspruch 2, dadurch gekennzeichnet, dass die Zentrale (3) die Mitteilung in einem Speicher zwischenspeichert.

4. Verfahren nach einem der Ansprüche 1 bis 3, dadurch gekennzeichnet, dass die Zentrale (3) dem Rufsignalisierungsgerät (5) die Art des erforderlichen Endgeräts (6) mitteilt.

5. Verfahren, insbesondere nach einem der Ansprüche 1 bis 4, dadurch gekennzeichnet, dass das Rufsignalisierungsgerät (5) an das von der Person in Betrieb genommene Endgerät (6) automatisch Daten übermittelt.

6. Verfahren nach Anspruch 5, dadurch gekennzeichnet, dass die Daten zur automatischen Erstellung der Telekommunikationsverbindung vom zweiten Endgerät (6) zum ersten (1) benutzt werden.

7. Verfahren nach einem der Ansprüche 1 bis 6, dadurch gekennzeichnet, dass die Zentrale (3) dem Rufsignalisierungsgerät (5) ein authentifiziertes Belastungszertifikat in Form digitaler Codes übermittelt, welches vom Rufsignalisierungsgerät (5) der Zentrale (3) vermittels des zweiten Endgeräts (6) zurückgegeben wird, um eine Gebührenbelastung für die Telekommunikationsverbindung zwischen dem ersten und dem zweiten Endgerät (1 bzw. 6) dem vom ersten Endgerät (1) aus Anrufenden zuzuweisen.

8. Verfahren nach einem der Ansprüche 5 bis 7, dadurch gekennzeichnet, dass die angerufene Person am zweiten Endgerät (6) - insbesondere durch eine vom Rufsignalisierungsgerät erzeugte entsprechende Tonwahlfolge - die Zentrale (3) anwählt, und dass die Identifikation der angerufenen Person gegenüber der Zentrale (3) mit Hilfe eines vom Rufsignalisierungsgerät (5) ausgesendeten Tonsignals erfolgt.

9. Verfahren nach einem der Ansprüche 5 bis 8, dadurch gekennzeichnet, dass beim Inbetriebnehmen, namentlich beim Abheben eines Hörers (6.2) des zweiten Endgeräts (6) das Rufsignalisierungsgerät (5) und das zweite Endgerät (6) mittels einer kurzreichweitigen Funkverbindung Daten austauschen, welche dem zweiten Endgerät (6) die automatische Verbindungsaufnahme mit der Zentrale (3) und letzterer die automatische Erstellung der Telekommunikationsverbindung zwischen erstem und zweitem Endgerät (1 bzw. 6) ermöglichen.

10. Verfahren nach einem der Ansprüche 1 bis 9, dadurch gekennzeichnet, dass das Rufsignalisierungsgerät (5) ein Kleingerät ist, das mit einem langreichweitigen Funkempfänger (7, 8) - jedoch nicht mit einem langreichweitigen Funksignalsender - und mit einem kurzreichweiten Sender/ Empfänger (10, 11) ausgerüstet ist.

11. Verfahren nach Anspruch 10, dadurch gekennzeichnet, dass als Rufsignalisierungsgerät (5) eine in einer Armbanduhr integrierte Schaltungsanordnung verwendet wird.

12. Verfahren nach einem der Ansprüche 1 bis 11, dadurch gekennzeichnet, dass ein systemmässig abzudeckendes Gebiet hierarchisch in Teilgebiete aufgeteilt wird, und dass die Aktivierung des Rufsignalisierungsgeräts (5) zunächst in einem oder mehreren bestimmten, hierarchisch untergeordneten Teilgebieten versucht wird, und dass nach einer vorgegebenen Zeitspanne in anderen Teilgebieten gesucht resp. ein Globalruf ausgesendet wird, sofern sich der Angerufene beim System nicht meldet.

13. Anordnung mit mindestens einem mobilen Rufsignalisierungsgerät (5), einer Zentrale (3), um ein Rufsignal an das Rufsignalisierungsgerät (5) zu übermitteln und einem Telekommunikationssystem, umfassend eine Mehrzahl von Endgeräten (1, 6), dadurch gekennzeichnet, dass das Rufsignalisierungsgerät (5) einen kurzreichweiten Sender (10, 11) aufweist zum Signalisieren eines Identifikationscodes an ein beliebig ausgewähltes Endgerät (6) bzw. mittels eines Endgeräts (6) an die im Telekommunikationssystem integrierte Zentrale (3).

14. Anordnung nach Anspruch 13, dadurch gekennzeichnet, dass das Endgerät (6) einen kurzreichweitigen Funkempfänger (16, 17) aufweist, um mit einem kurzreichweitigen Sender (10, 11) des Rufsignalisierungsgeräts (5) in Kontakt treten zu können.

15. Anordnung nach Anspruch 13 oder 14, dadurch gekennzeichnet, dass das Endgerät (6) eine Steuerschaltung (18, 19) aufweist, die bei einer Inbetriebnahme des Endgeräts (6) automatisch das Rufsignalisierungsgerät (5) abfragt.

16. Anordnung nach einem der Ansprüche 13 bis 15, dadurch gekennzeichnet, dass die Zentrale (3) eine Schaltung aufweist, um zusammen mit dem Rufsignal ein codiertes Belastungszertifikat zu übermitteln.

17. Anordnung nach einem der Ansprüche 13 bis 16, dadurch gekennzeichnet, dass die Zentrale (3) und/oder das Rufsignalisierungsgerät (5) einen Speicher für Daten betreffend eine persönliche Konfiguration des vom Benutzer des Rufsignalisierungsgeräts (5) in Betrieb genommenen Endgeräts (6) aufweist und dass das Endgerät (6) über einen Zwischenspeicher zum Laden der Daten verfügt.

18. Anordnung nach einem der Ansprüche 13 bis 17, dadurch gekennzeichnet, dass die Zentrale (3) einen Speicher für ein Benutzerprofil der das Rufsignalisierungsgerät mit sich tragenden Person aufweist zwecks Rufumleitung, Abwesenheitsmeldung, Mitteilung des wahrscheinlichsten Aufenthaltsorts o. dgl.

19. Armbanduhr, insbesondere zur Durchführung des Verfahrens nach einem der Ansprüche 1 bis 12, gekennzeichnet durch einen kurzreichweitigen Sender/Empfänger zum Uebermitteln von Daten an ein Endgerät eines Telekommunikations-systems.

20. Endgerät, insbesondere zur Durchführung des Verfahrens nach einem der Ansprüche 1 bis 12, gekennzeichnet durch einen kurzreichweitigen Sender/Empfänger zum Empfangen von Daten von einem Rufsignaliserungsgerät (5).

21. Verfahren zum Erstellen einer gebührenpflichtigen Telekommunikationsverbindung zwischen einem ersten und einem zweiten Teilnehmer, wobei
a) der erste Teilnehmer mit einem Endgerät (1) mit einer Zentrale (3) Verbindung aufnimmt unter Angabe einer dem Rufsignalisierungsgerät (5) zugeordneten Nummer,
b) die Zentrale (3) aufgrund der eingegebenen Nummer einen Funkruf an das Rufsignalisierungsgerät (5) erlässt und
c) der das Rufsignalisierungsgerät (5) mitführende Teilnehmer sich bei der genannten resp. einer mit dieser verbundenen weiteren Zentrale mit Hilfe eines beliebigen, mit dem ersten Endgerät (1) kommunikationsfähigen zweiten Endgeräts (6) meldet, und wobei
d) die Zentrale (3) aufgrund der Verbindung zwischen ihr und dem ersten Endgerät (1) ein authentifiziertes Zertifikat erzeugt, um bei einem Rückruf des zweiten Teilnehmers von einem beliebigen zweiten Endgerät (6) aus die Gebühren für die Telekommunikationsverbindung zwischen zweitem und erstem Endgerät (6 resp. 1) automatisch entsprechend dem Zertifikat dem ersten Teilnehmer zuweisen zu können.

22. Verfahren nach Anspruch 21, dadurch gekennzeichnet, dass das Zertifikat in der Zentrale (3) zwischengespeichert wird, bis der zweite Teilnehmer vom beliebigen zweiten Endgerät (6) aus mit der genannten resp. einer mit dieser verbundenen weiteren Zentrale Verbindung aufnimmt.

23. Verfahren nach Anspruch 21, dadurch gekennzeichnet, dass das Zertifikat via Funkruf an das Rufsignalisierungsgerät (5) übermittelt wird und dass das Rufsignalisierungsgerät (5) das Zertifikat via beliebigem zweiten Endgerät (6) an die genannte resp. mit dieser verbundenen weiteren Zentrale rückübermittelt, um eine Belastung der Gebühren beim ersten Teilnehmer zu ermöglichen.
